# EUROPEAN PATENT APPLICATION

(11) **EP 0 681 078 A2**
(43) Date of publication of application: **08.11.1995**
(21) Application number: 95106188.6
(22) Date of filing: 26.04.1995
(51) Int. Cl.: E05B 67/06, E05B 67/38

(54) **Security device**

(30) Priority: 26.04.1994 US 233291
(71) Applicant: Winner International Royalty Corporation, Sharon, Pennsylvania 16146 (US)
(72) Inventor: Winner, Kevin D., Hermitage, Pennsylvania 16148 (US)
(74) Representative: Schumacher, Horst, Dr. Dipl.-Phys.

(57) **Abstract**

A security device useful in preventing the theft of bicycles, mopeds and the like comprises a generally U-shaped shackle member (45) having two parallel arms (61,63) connected to one another by an intermediate bight (59). A second member (47), either U-shaped or a bar extends between and engages both of said arms (61,63) and is moveable axially therealong toward or away from the bight (59). Locking means (48) coact with said second member and at least one of said arms (61) to fix the position of the second member with respect to the arms (61,63). The use of longitudinally spaced semicircular grooves (363) on one or both arms cooperating with a spring biased spherical bearing means (355) associated with the second member permits it to be freely positioned along the shackle member. A lock mechanism (371) is used to engage one of said grooves to lock the bar in position. Alternatively, positioning of the second member may be achieved by the use of a pawl (73) and ratchet (65) arrangement which allows the second member to be freely movable in either direction along the arms (61,63) when the device is unlocked, but only in the direction toward the bight (59) when the device is locked. The locking member may be a combination lock (749,849) or may be activated by a key or remote transmitter. When the device includes grooves or ratchet teeth along both arms, a singular lock may be used to simultaneously or sequentially co-act with the two arms. Alteratively, two separate locks may be utilized. The device may also include a compressible and extendible rubber or elastomeric boot (51) preferably in the form of bellows. This boot provides a protective cover around ratchet teeth or semi-circular grooves that are longitudinally spaced along one of the arms (61,63) of the U-shaped member. The boot (57) progressively surrounds the ratchet teeth (65) or grooves as the rod is disengaged or withdrawn from the sleeve. Additional means comprising plastisol coatings and bubble wrap material may be included to protect the various elements of the device and the bike from damage and wear.

## Description

### FIELD OF THE INVENTION

This invention relates to a security device, more particularly a theft prevention device for use on bicycles, motorcycles, mopeds and other conveyance means. Yet more particularly, the invention relates to a lockable device useful for coupling a two or three wheeled conveyance means to a fixed object such as a pole or a bike rack to insure safety from theft, or alternatively to secure one or more wheels of e.g. a bicycle, to the frame to deter theft of the component parts thereof.

### BACKGROUND OF THE INVENTION

As a means of transportation, bicycles have been around for hundreds of years. In certain cultures and countries, bicycles are a mode of transportation which rivals or exceeds cars in popularity and in practicality.

In recent years, high-tech, high-performance bicycles costing many hundreds and even thousands of dollars have been developed. These bicycles typically may use lightweight, expensive alloys, or composites for the component parts. They often include elaborate shifting, gearing and braking mechanisms. When left alone even for a few minutes, these expensive bicycles increasingly have become the target of random and organized theft. Concurrently, the growth in the theft of these expensive bicycles has compelled the development of theft deterrent devices and systems ranging in complexity from simple chain padlock combinations to sophisticated, expensive electronic warning devices.

One such device shown in U.S. Patent No. 5,331,830, comprises a hardened metal U-shaped member with a bar extending through the ends of the U, lockable into place. The device enables the owner to secure a bike or similar device to a lightpost, bike rack or other secure object. However, the device lacks the feature of adjustability to accommodate different types of bikes, bike configurations, and anchoring devices. Thus, it is necessary for bike stores to inventory several sizes of this device to permit each purchaser to buy the size needed for his or her particular style and size of bike.

Many of the other prior art devices such as padlocks and chains are deficient in one or more respects such as strength, ease with which the lock can be picked or broken, even by a relatively inexperienced thief, cost, lack of adaptability, and stowability when not in use.

### SUMMARY OF THE INVENTION

These and other drawbacks are overcome by the present invention which comprises a theft deterrent device or security system comprising a pair of opposed, generally U-shaped members, each member having a pair of parallel arms, the arms of one member being slidably engaged with the parallel arms of the other member. A lock means is associated with said U-shaped members to allow said members to be slid together, while at the same time securing the members from being pulled apart. The first U-shaped member contains a plurality of ratchet teeth spaced longitudinally along one of the parallel arms and the lock means includes a pawl adapted to engage said ratchet teeth to permit sliding of the U-shaped members together while preventing the members from being pulled apart when the lock means is locked. The second U-shaped member includes a tubular sleeve to slidably receive said arm containing the ratchet teeth. Further means are included for progressively covering the ratchet teeth with a protective boot as the arm is withdrawn from the sleeve.

In another aspect of the invention, the security device utilizes a rod slidably received within a cylindrical sleeve wherein the rod contains a plurality of longitudinally spaced ratchet teeth. A flexible protective boot is associated with the rod and is adapted to telescopically cover the ratchet teeth on the rod as the rod is withdrawn from the sleeve. This boot preferably comprises an elastomer or rubber molded in the shape of hollow compressible bellows. As the ratchet arm is inserted into the sleeve, the bellows compress together as an accordion. However, as the arm is withdrawn from the sleeve, the bellows resume their natural extended shape, covering the ratchet teeth thereby protecting the teeth from damage and weathering by the elements, and protecting the user from contacting and being pinched or cut by the edges of the ratchet teeth, and protecting the surface finish of the bike from scratches or other damage.

Another embodiment covers a theft deterrent device comprising a generally U-shaped member having first and second parallel arms and a bight, at least the first of said arms containing a row of lock engaging means spaced along a portion of its length, and a bar having first and second ends, said bar extending between and engaging said parallel arm. The bar is moveable in the axial direction of said arms toward and away from said bight. Lock means engaged by the lock engaging means serves to fix the location of the bar along said arms and to prevent removal of the bar from the arms.

The device includes a plurality of semi-circular grooves evenly spaced longitudinally along at least one of the arms. The grooves partially or completely circumscribe the arm in a generally radial direction or alternatively in a helical or spiral pattern. The lock is contained in a housing and includes spring, lever or cam biased means for positioning the bar at any point along the arms and a locking mechanism engaging the grooves. The positioning means includes a blind hole at right angles to said passageway, an opening communicating with the passageway and a spring biased bearing extending into said opening to partially intersect the passageway and to contact the grooves. Movement of the bar along the grooves is permitted when the device is unlocked, and the relative movement between the bar and the arms is prevented when the device is locked.

Alternatively, a plurality of ratchet teeth are uniformly spaced from one another longitudinally along at least one of the arms. A spring biased pawl within the lock housing engages the ratchet teeth to securely fix the position of the bar with respect to the U-shaped member. Each ratchet tooth includes a stop surface generally at right angles to the axis of the arm and a surface extending inwardly at an angle from the radial outer edge of the stop surface. The surfaces are arranged along the arm whereby movement of the bar is limited to the closing direction toward the bight when the device is locked. Free movement of the bar in either direction is possible only when the device is unlocked. The ratchet teeth are adapted to partially or completely circumscribe the arm.

In either embodiment, the device includes grooves or ratchet teeth along one or both the parallel arms. The locking means includes an individual lock for each set of grooves or teeth, or alternatively one lock which simultaneously or sequentially engages the grooves or teeth along both arms. Key activated and combination locks as well as locks operated from a remote location by, for example, a battery operated transmitter, are useful in this invention.

The component parts of the theft deterrent device that make contact with the bicycle preferably are provided with means to minimize metal to metal contact. The means comprises a polymeric plastisol coating adhered to various exposed portions of the U-shaped member and bar and in addition may include one or two flexible boots to cover portions of the arms adapted to be engaged by the bar. Each boot is bellows shaped and is secured at one end to one arm in proximity to the polymeric coating. The free end of the boot when fully extended preferably covers the entire portion of the arm that is unprotected by the plastisol coating. As the bar is engaged with the arm and is moved into closed position with respect thereto, the bar contacts and compresses the boot accordion-style. Additional protection such as a bubble wrap may be used to cover and protect portions of the device such as the lock.

It is an object of the present invention to provide a theft deterrent device of the type useful on bicycles, mopeds, and other two and three wheeled conveyances means, whether self propelled or adapted to be propelled by persons, said security device being rugged in construction and having greater adaptability than those of the prior art.

Another object is a security device containing safety features which discourage attempts at theft.

Yet another feature is a bicycle security device that is collapsible to reduce its overall size when not in use, while providing more adaptability in use.

### BRIEF DESCRIPTION OF THE DRAWINGS

These and other objects which will become apparent upon reading the following description are achieved in the manner to be hereinafter described, with particular reference to the drawings in which;
FIGURE 1 is a perspective view of a portion of a chain driven bicycle secured to a post;
FIGURE 2 is an elevational view of an assembled security device of the present invention;
FIGURE 3 is an elevation of the same device disassembled, shown partially in cross section;
FIGURE 4 is an enlarged partial cross sectional view of a portion of the lock showing movement of the ratchet teeth during assembly of the lock;
FIGURE 5 is a partial cross sectional view of the same portion of the lock showing the ratchet teeth being withdrawn from the lock;
FIGURE 6 is a detailed cross sectional view taken along line 6-6 of Fig. 2 of a lock mechanism useful in connection with the present invention;
FIGURE 7 is an exploded perspective view of the component parts of the present invention;
FIGURE 8 is a view of a variation of the present invention showing ratchet teeth partially circumscribing a rod aligned with a sleeve;
FIGURE 9 is a view taken along line 9-9 of Fig. 8;
FIGURE 10 is a detailed cross sectional view of the lock employing the ratchet teeth shown in Figs. 8 and 9 with the lock in the closed position;
FIGURE 11 is a cross sectional view similar to Fig. 10 with the ratchet arm swung into the open position;
FIGURE 12 is a perspective view similar to Fig. 1 showing a smaller version of the lock of the present invention adapted to secure a wheel of a bicycle to the bicycle frame.
FIGURE 13 is a perspective view of a portion of a chain driven bicycle secured to a post by a device of the present invention;
FIGURE 14 is an enlarged partially cut-away view of one embodiment of the locking mechanism of the present invention in the locked position;
FIGURE 15 is an enlarged sectional view taken along lines 15-15 of Figure 14;
FIGURE 16 is an enlarged sectional view of the device of Figures 14 and 15 shown in the unlocked position;
FIGURE 17 is an exploded perspective view of the embodiment shown in Figures 13 through 16.
FIGURE 18 is a view of another embodiment of the present invention showing in partial cross section the locking mechanism in the locked position;
FIGURE 19 is a cross-sectional view taken along lines 19-19 of Figure 18;
FIGURE 20 is a cross-sectional view of the device noted in Figures 18 and 19 showing the locking mechanism in the unlocked position;
FIGURE 21 is a view of another embodiment of the present invention showing the use of a pawl and ratchet arrangement as the locking mechanism.
FIGURE 22 shows the device of the present invention in the closed and locked position, including the use of a flexible boot on each of the arms;
FIGURE 23 shows the device of Figure 22 in the open position with the flexible boot extended to cover the arms of the U-shaped member;
FIGURE 24 shows another embodiment utilizing a combination lock to secure the device in the locked position; and
FIGURE 25 shows the use of a combination lock at an alternative location on the device.

### DETAILED DESCRIPTION OF THE INVENTION

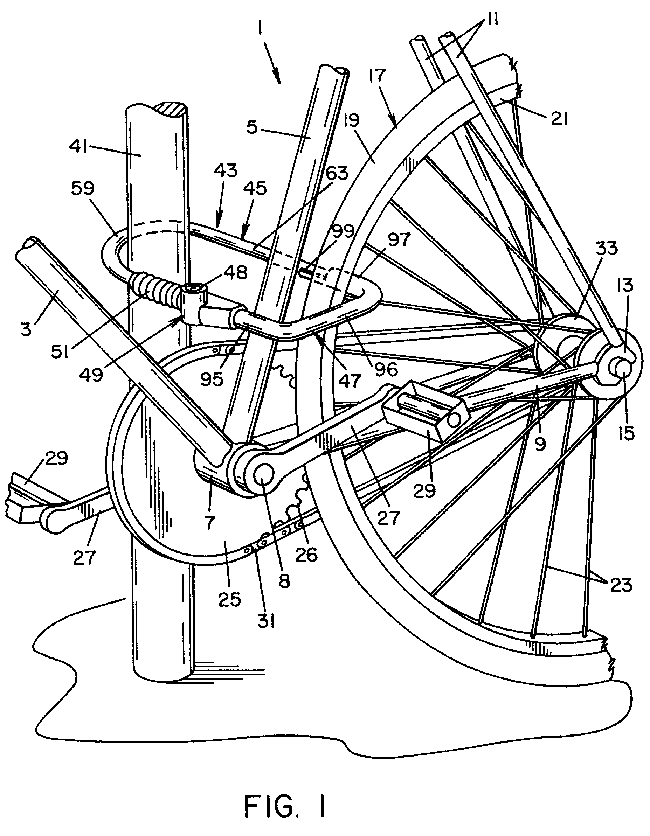

Referring now to the drawings, FIGURE 1 shows in perspective a portion of a two wheeled bicycle 1. The frame of the bicycle includes a down tube 3, a seat tube 5 and a chain stay 9 all joined to a bracket shell 7. Shaft 8 extends through bracket shell 7 and is connected to cranks 27. Chainwheel 25 containing a plurality of teeth 26 on the circumference thereof engages chain 31. Two pedals 29 are connected to the cranks 27. The chain stay 9 and seat stay 11 converge to form two dropouts 13 into which the rear wheel axle 15 is secured. The rear wheel 17 comprises a tire 19 mounted on rim 21 held in place around the axle 15 by spokes 23. Teeth (not shown) on free wheel 33 are engaged by chain 31 whereby the bicycle is propelled by a rotational movement of the pedals said movement being transmitted through the chain wheel 25 and chain 31 to free wheel 33.

A security device 43 is shown coupling the bicycle 1 to an immovable post 41. The device comprises a U-shaped rod 45 engaging a U-shaped tubular sleeve 47 and held in position by lock 48. The rod 45 contains a plurality of longitudinally extending ratchet teeth (not shown) covered by flexible boot 51 which is in the shape of a diaphragm or bellows. The sleeve 47 is shown extending around seat tube 5 and wheel 17 to insure not only that the bicycle frame cannot be taken, but that the wheel 17 cannot be readily removed from the dropout 13 and taken while leaving the bike frame secured to the post. Added security can be achieved by disengaging the front wheel from the frame and securing it to the post 41 with the security device 43.

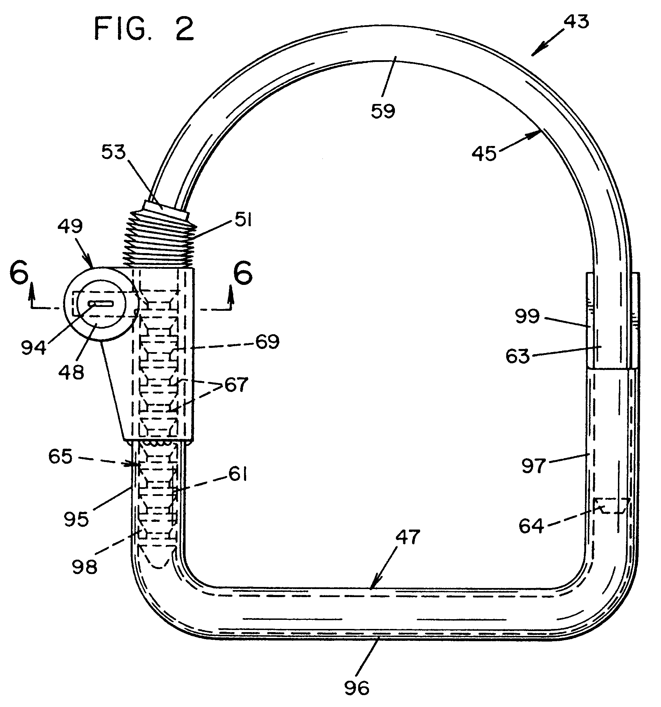

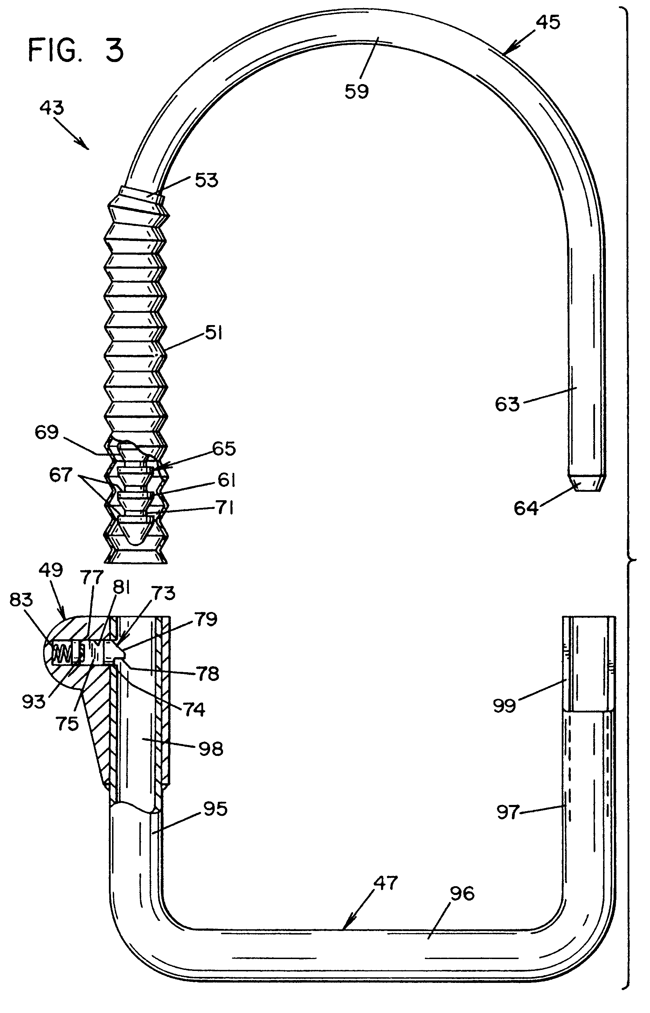

Figure 2 shows the security device 43 of the present invention in a fully closed position and Figure 3 shows it in the open or extended position. The device 43 comprises a rod 45 preferably fabricated from case-hardened steel, said rod consisting of a pair of parallel rod arms comprising first arm 61 and second arm 63 joined together by the curved base or bight 59 of the rod. Sleeve 47 preferably fabricated from a piece of steel tubing, is shown in the shape of a U having a base 96 joining a first tubular sleeve 95 and a second tubular sleeve 97 parallel to the first. Lock housing 49 telescopically engages said first sleeve 95 and is secured thereto by suitable means such as brazing or welding. The lock housing includes lock means 48, to be hereinafter described in greater detail. Flexible boot 51, secured to rod arm 61 contacts lock housing 49 and the individual bellows or accordion pleats are compressed or folded together when the ratchet teeth telescopically engage said first tubular sleeve 95.

The flexible boot 51 in a normally extended position as shown in Fig. 3 surrounds the portion of the first rod arm 61 having the ratchet teeth 65 thereon. Preferably the boot 51 includes a flange 53 which surrounds rod arm 61 and is secured thereto. The flange 53 may be of the same material as the boot, being an integral part thereof. Alternatively, it may be a metal sleeve molded to the end of the boot and secured to the rod by means such as an adhesive, spot welding, or a set screw.

The lock 48 contains a pawl 73 in blind hole 81, said pawl having an angular end surface 79 urged into the passageway 74 in sleeve arm 95 by spring 83. Second sleeve arm 97 contains a notch 99 to facilitate assembly of the security device. The first arm 61 of rod 45, containing the ratchet teeth, is slightly longer by about ½" to 1½" than the second arm 63. During assembly, the first arm 61 is inserted into the first parallel sleeve arm 95 a short distance after which the rod may be pivoted around until the second arm 63 contacts and engages the notch 99 of the second sleeve arm 97 whereupon the tapered end 64 facilitates the telescopic engagement of the two arms of the rod into the two parallel sleeve arms of sleeve 47.

The security device of the present invention preferably employs a locking mechanism similar to that used in an automobile security device of the type commonly referred to as "The Club". The details and modifications of this locking mechanism are shown in the following United States Patents, the teachings of which are incorporated herein by reference; 4,738,127 issued April 19, 1988; 4,856,308 issued August 15, 1989; 4,935,047 issued June 19, 1990 and 5,277,042 issued January 11, 1994. Briefly, these patents describe a plurality of longitudinally extending frusto-conical projections or spaced grooves on a case-hardened steel rod which telescopically engages a sleeve and is capable of being locked to prevent collapsing movement. A suitable key operated device actuates a spring loaded pawl which engages the grooves between adjacent frusto-conical projections to prevent collapsing movement. Alternatively, as noted in U.S. 4,738,127, the locking member may involve the use of a ball bearing, rather than a pawl, to engage curved grooves that extend longitudinally of the rod. A semi-arcuate locking member is rotatable between a locking position wherein the arcuate portion engages one of the curved grooves to prevent relative movement between the rod and sleeve, and an unlocking position wherein the locking member disengages the grooves. The device is adapted to be locked onto the inside rim of a steering wheel of an automobile. The locking mechanism serves to prevent the rod from telescopically collapsing into the sleeve.

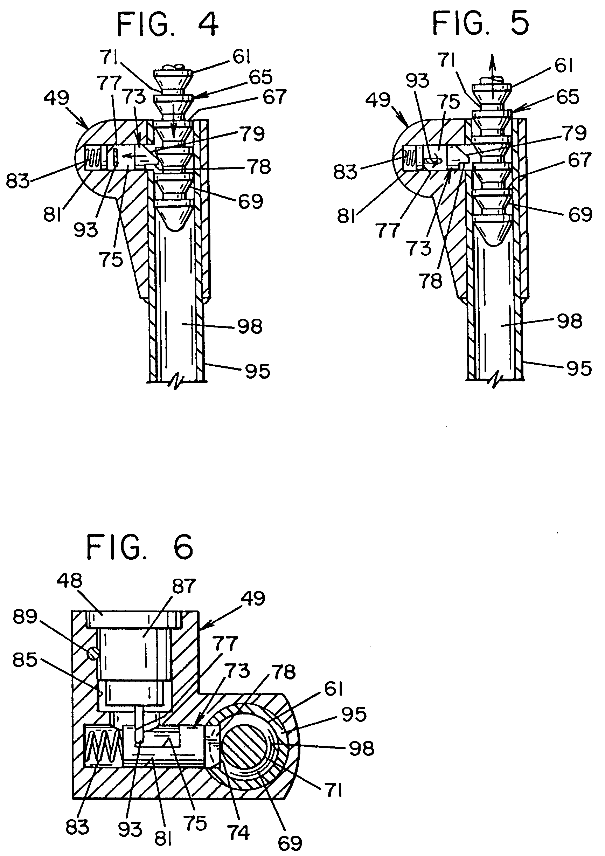

Any one of the locking features shown in these references may be used, with appropriate modifications, in the lock of the present invention. One specific modification involves the reversal of the directions of the frusto-conical teeth on the rod. The device described in the previously mentioned patents contains ratchet teeth which are adapted to prevent the rod, when in a locked position, from telescopically collapsing into the sleeve. However, in the embodiments described in connection with the present invention, one objective is to prevent, when the device is locked, the rod from being telescopically removed from the sleeve. Therefore, it is necessary to reverse the direction of the ratchet teeth on the rod from the direction shown in said patents. This feature is clearly shown in Figs. 4 and 5.

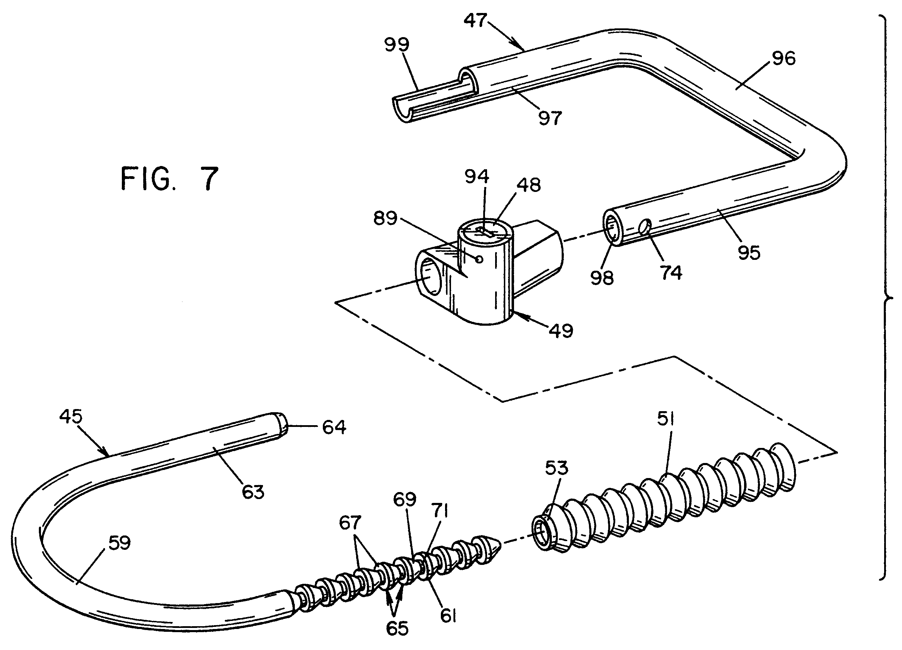

Figure 4 shows the action of the locking mechanism with the rod arm being inserted into the cylindrical sleeve, while Figure 5 shows the locking mechanism in the unlocked position, with the pawl in the retracted position thereby facilitating removal of the rod arm from the sleeve. The lock housing 49 includes a lock passageway of circular cross section having a diameter corresponding to the outside diameter of the first sleeve so that the lock housing is telescopically receivable over the sleeve. The sleeve contains a sleeve hole 74 extending through the wall thereof. The lock housing includes a blind hole 81 aligned with, and having an inner diameter approximating the diameter of the sleeve hole 74. Lock housing 49 further comprises a lock cylinder hole 85 at right angles to the blind hole 81. The locking mechanism disposed within the lock housing 49 includes a coil spring 83 and a ratchet pawl 73 extending from the coil spring through the sleeve hole and projecting into the annular passageway 98 in the first sleeve arm 95. The ratchet pawl 73 includes an angular end surface 79, a groove 75 and a torque blade surface 77 within the groove 75. The locking means further comprises a key lock cylinder 87 having a key slot 94, (shown in Fig. 7) and a torque blade 93. The torque blade extends into the slot 75 in the ratchet pawl 73 to register and cooperate with the torque blade surface 77.

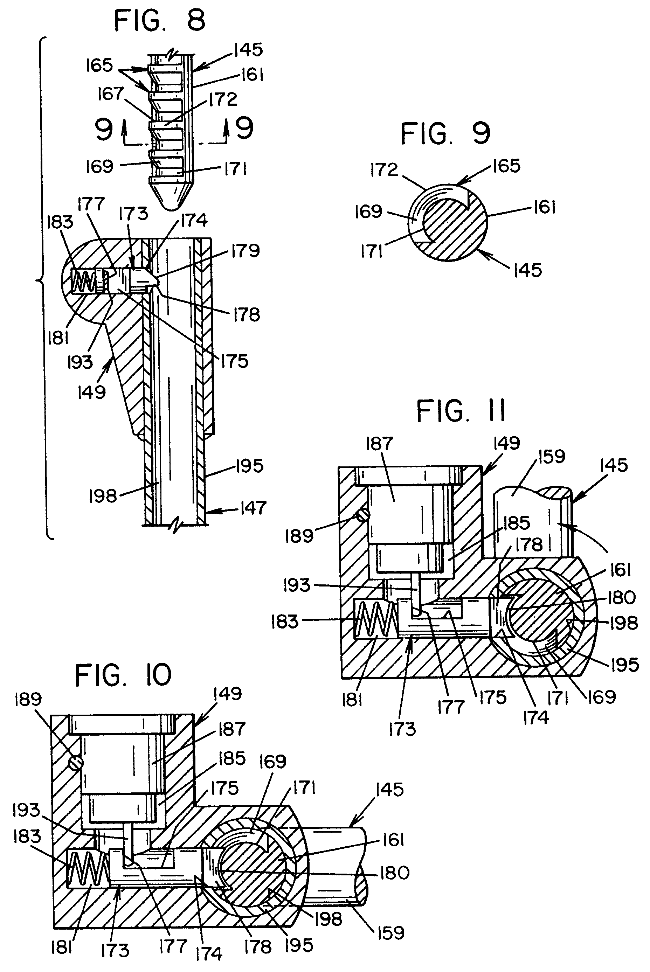

As shown in Fig. 1, the lock housing is arranged with respect to the U-shaped arms of the security device in such a manner to facilitate locking and unlocking the same, so as not to interfere with securing a bicycle to a post or securing a tire to the frame of the bicycle. Operation of the locking means, when the rod contains ratchet teeth totally circumscribing the rod is shown in Figs. 4, 5 and 6. A corresponding operation of the lock when the ratchet teeth only partially circumscribe the rod is shown in Figs. 8-11.

As shown in Figure 6, the coil spring 83 normally biases the ratchet pawl 73 outwardly of the blind hole 81 into engagement with the inner cylindrical surface 71 of the ratchet teeth 65. Movement of the rod member through the annular passageway 98 of the first sleeve 95 indicated by the arrow in Fig. 4 causes the conical bearing surface 69 of the ratchet teeth to act against the angular end surface 79 of the pawl, whereby the pawl 73 is biased into the blind hole 81 thereby compressing spring 83. As each ratchet tooth passes the pawl, the spring 81 urges the pawl back into the annular space between the conical surfaces, causing the clicking ratchet sound common to this type of device. Use of the key lock cylinder 87 to rotate torque blade 93 to act against the torque blade surface 77 of the pawl, as shown in Fig. 5, holds the pawl in a position retracted from the annular passageway, thereby permitting withdrawal of the rod 61 from sleeve 95. However, with the pawl in the position shown in Fig. 4, the stop surface contact 78 of the pawl abuts the stop surface 67 of the ratchet tooth thereby preventing the rod arm 61 from being withdrawn from the first sleeve. This represents the device in the locked position. The key lock cylinder is retained within the key hole by locking pin 89.

Figure 7 shows an exploded view of one device of the present invention comprised of four component parts including steel rod 45, boot 51, lock housing 49 and sleeve 47. Clearly shown in this view is the hole 74 in the first parallel sleeve arm 95. This hole is adapted to coincide with the pawl (not shown), engaged in the blind hole within the lock housing 49. Clearly shown in the second sleeve arm 97 is the notch 99 which is adapted to facilitate assembly of the parts.

It will be noted in Fig. 7 that the boot 51 is comprised of a plurality of longitudinally juxtaposed, integrally joined compressible bellows in the normally extended state. The relaxed length of the bellows is sufficient to cover all of the longitudinally spaced ratchet teeth 65 on the first arm 61 of rod 45. Means such as flange 53 bonded to the bellows is adapted to secure the bellows to the arm 61 immediately beyond the ratchet teeth in the manner previously described.

The boot useful in this invention is typically prepared by molding a rubber or elastomeric composition into shape and curing or vulcanizing the shape under elevated temperatures and pressures. The composition is compounded with suitable cross linking agents and fillers. It preferably includes antioxidizing agents and other additives to prevent the boot from cracking and crazing upon flexing, stretching and exposure to sunlight and other atmospheric and weather related conditions. When cured, the rubber or elastomer is transformed from a thermoplastic to a thermosetting material.

Most cured rubbers and elastomers having acceptable deformation and elastic recovery properties coupled with good weathering characteristics are suitable for use in the present invention. The selection, compounding and molding of these materials are carried out according to established techniques well known in the trade. Examples of suitable elastomers and rubbers are butyl rubber, neoprene and natural rubber (polyisoprene). Other elastomers including certain polyurethane compounds and polychloroprene may be used.

Instead of using compressible bellows, other means may be employed for providing an elastic protective covering for the ratchet teeth. Thus, an elastomer having very good elongation properties may be formed into a cylindrical sheath with one end detachably or permanently joined to the rod immediately beyond the teeth and the other end joined to the sleeve or the lock housing. Thus, as the rod is retracted from the sleeve, the sheath elongates to surround the teeth as they are exposed. This variation can be used with the ratchet teeth continuously engaged with the sleeve while still permitting the second rod arm to become disengaged from the notch in the second sleeve arm and to be rotated with respect thereto as previously described to permit coupling and uncoupling of the security device from the cycle.

Although the embodiments hereinabove described involve the use of ratchet teeth that totally circumscribe rod 61, it can be readily determined that there may be no need to be able to rotate the rod 45 in a full 360 degree arc in order to secure the bicycle to a tree, post or other anchor. In fact, Figs. 8-11 shown an embodiment where the ratchet teeth extend less than halfway around the rod.

Fig. 8 shows rod 145 axially aligned with arm 195 of sleeve 147 adapted to be inserted in annular passageway 198. A plurality of ratchet teeth 165 are disposed longitudinally along the said rod 145, each of said teeth comprising a stop surface 167 and a partially conical surface 169 connecting inner partially cylindrical surface 171 with outer partially cylindrical surface 172. The ratchet teeth are preferably machined into the rod according to standard techniques well known in the trade.

As in the previous embodiment, a lock housing 149 is adapted to fit over sleeve arm 195 and to be securely coupled thereto. The lock housing contains a blind hole 181 in which a spring 183 bears against the ratchet pawl 173 urging the pawl through sleeve hole 174 into annular passageway 198. The operation of the locking mechanism is identical to that described in connection with the previous embodiment. The rachet pawl 173 contains a groove 175 into which extends torque blade 193. This blade comprises part of the lock cylinder 187 positioned in key hole 185 and held in place by locking pin 189. Rotation of the torque blade 193 by the use of a key in the lock cylinder 187 will cause said torque blade to bear against the torque blade surface 177 to urge the pawl out of the annular passageway 198 thereby permitting free movement of rod 145 into and out of sleeve arm 195.

Figure 10 shows the positional relationship of the bottom surface or bight 159 of the rod 145, when the two parallel arms of rod 145 are engaged with the corresponding arms of sleeve 147. It will be noted that the end 180 of the pawl 173 is curved rather than straight as shown in the Fig. 6 embodiment. The curved surface contacts the inner semi-cylindrical surface of 171 of the tooth 165. When in this position, stop surface contact 178 of pawl 173 abuts stop surface 167 thereby preventing removal of rod 145 from sleeve 147. However, as previously described, further movement of the rod into the sleeve when the device is unlocked, is achieved as each of the conical surfaces 169 pushes pawl 173 into blind hole 181 compressing spring 183 until the outer surface 172 of tooth 165 passes the curved edge of the pawl whereupon the spring 183 biases the pawl against the next adjacent inner surface 171.

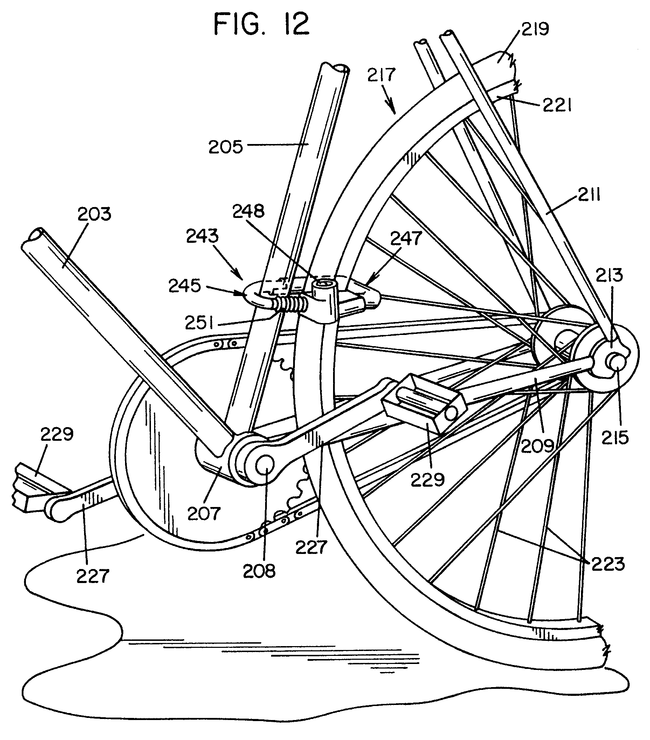

The first parallel arm 161 of rod 145, as previously mentioned, may be ½" to 1½" longer than said second parallel arm, thereby permitting the first arm to be inserted into the first sleeve arm 195 of sleeve 147 prior to the second arm engaging the second sleeve arm. At the same time, if the first rod arm 161 is inserted far enough so that the teeth become ratcheted against the ratchet pawl, mounting the security device on the cycle, and securing it to a post or other security means is facilitated by permitting the first arm to be rotated at least 90 degrees with respect to the second arm, as shown in Fig. 11, and thereafter moving the rod 145 to the position shown in Fig. 10 whereupon the second rod arm engages the notched portion of the second sleeve in the same manner previously described.

Fig. 12 shows another adaptation of the present invention wherein a security device is used to securely attach the wheel of a bicycle to the frame thereof, thereby preventing the removal and theft of the wheel. As previously noted, the portion of the bike shown in Fig. 12, includes a down tube 203, seat tube 205 and chain stay 209 joined to a bracket shell 207. Cranks 227 are attached to shaft 208 extending through the bracket shell, and are rotatably engaged therewith through the use of suitable ball bearings or the like. Pedals 229 are attached to the free ends of the cranks 227.

Seat stay 211 and chain stay 209 converge to form a dropout 213 adapted to hold the rear wheel 217. This wheel includes a tire 219, rim 221 and spokes 223 connected to axle 215. Because of the removing and taking wheels from a bicycle, particularly with quick release connections, the rear wheel is secured to the seat tube by security device 243. The device is smaller than but is otherwise identical to the devices already described in detail. The device consists of a generally U-shaped rod 245 adapted to engage corresponding arms of sleeve 247. The rod contains the ratchet teeth covered by boot 251, the entire device being secured against separation of the rod from the sleeve by lock means 248.

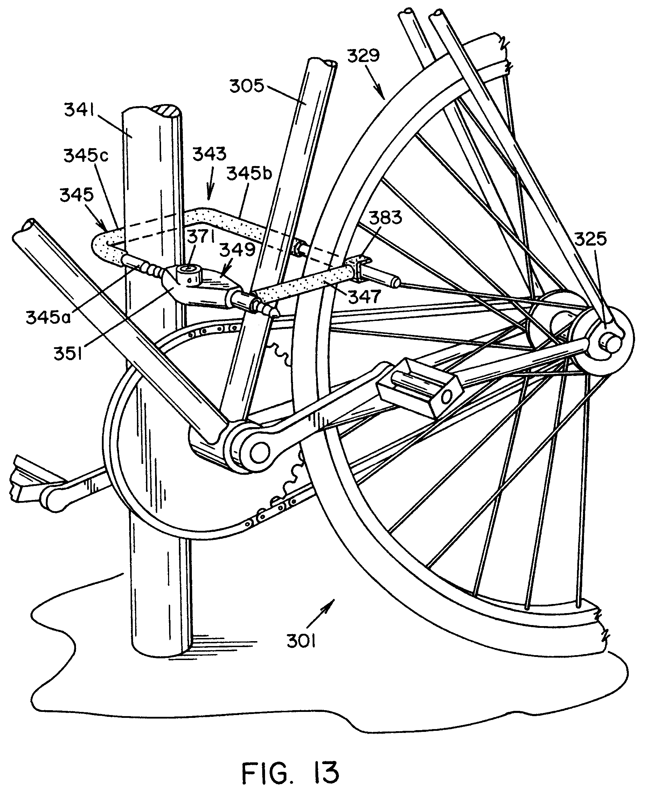

Figure 13 shows another embodiment of the theft deterrent device 343 coupling a bicycle 301 to an immovable post 341. This device 343, comprises a U-shaped shackle member 345 engaging bar 347 and held in position by lock 349. The device 343 is shown extended around seat tube 305 and wheel 329 to ensure not only that the bicycle frame cannot be stolen, but that the wheel 329 cannot be readily removed from the dropout 325 and taken while leaving the bike frame secured to the post. Added security can be achieved by removing the front wheel from the frame and securing it in like manner with the security device 343 to the post 341.

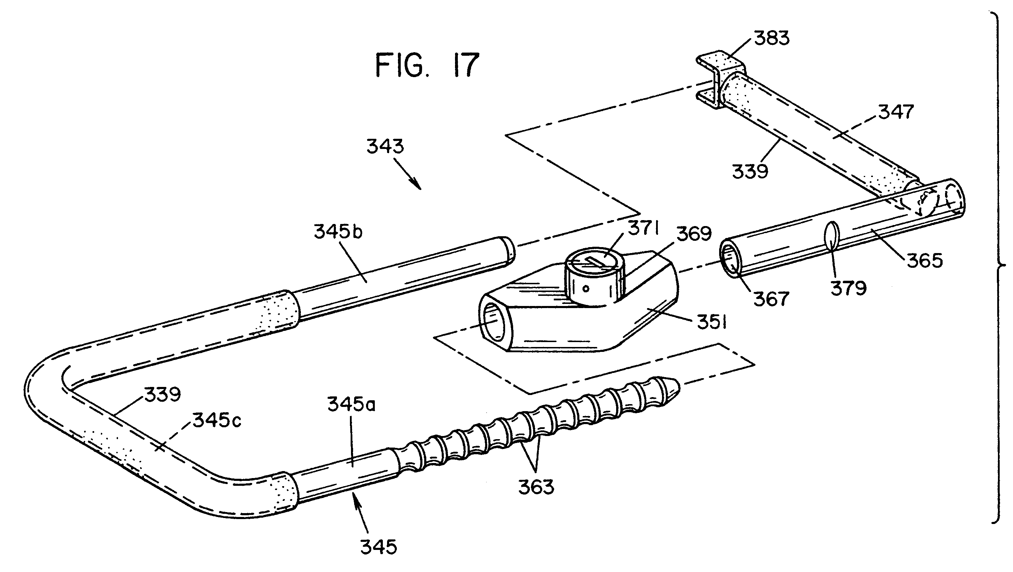

Turning now to Figure 17, the component parts of this embodiment of the theft deterrent device 343 are shown in perspective. The device includes a generally U-shaped member 345 comprising first arm 345a and second arm 345b joined to one another by bight 345c. Said bight can be straight as shown or can be generally curved. The two arms 345a and 345b are parallel to one another. The first arm 45a contains a plurality of longitudinally spaced semi-circular grooves 363, the spacing between each of the adjacent grooves along the length of the arm being equal.

A bar or rod 347 is adapted to engage the two arms of the U-shaped member 345. The bar 347 is secured to a tubular sleeve 365 adapted to be telescoped over the annular grooves of arm 345a. The opposite end of the bar 347 contains a channel 383 adapted to slide along the second arm 345b. The channel can readily be replaced by an annular passageway through the bar or by a second tubular sleeve similar to sleeve 365. A suitable lock such as a conventional cylindrical key lock 371 mounted in lock housing 351 is secured to sleeve 365. Boss 369 on said lock housing contains the key lock mechanism. Certain exposed portions of the device are covered with an adhered polymeric plastisol coating 339.

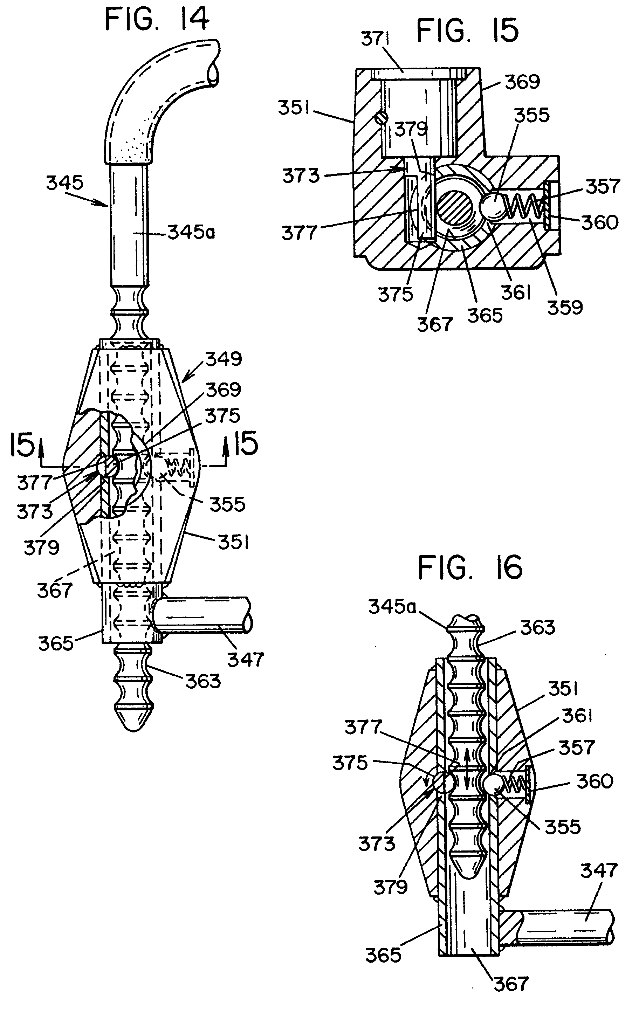

Details of the locking mechanism of this embodiment are shown in Figures 14, 15 and 16. The housing 351 surrounds sleeve 365 to form an integral structure therewith, with passageway 367 extending therethrough. Locating or positioning means comprising spherical bearing 355 and helical spring 357 are located in blind hole 359 in the housing. The hole 359 communicates with passageway 367 through aperture 361 in the sleeve 365. The diameter of the spherical bearing is slightly greater (approximately 10-30%) than the diameter of the aperture, thereby restricting complete access of the bearing into the passageway. Nevertheless, the bearing extends part way into the passageway a sufficient distance so as to engage the semi-circular grooves 363 in arm 345a. The spring 357 is compressed within the bore 359 by retainer 360 whereby the bearing is constantly biased toward said aperture 361.

The housing 351 includes a boss 369 laterally offset with respect to the axis of passageway 367 and arm 345a. A cylindrical key lock 371 is mounted in a recess within said boss 369. The lock includes a locking member 373 having a semi-circular arcuate surface 375 and a flat portion 377. The sleeve 365 contains a slotted aperture 379 (shown in Figure 17) which intersects the passageway 367. The bore of the key lock 371 is aligned relative to passageway 367 such that the arcuate surface 375 of locking member 373 is partially disposed within passage 367 when the lock is engaged, as shown in Figure 14. However, when the key lock is turned 180°, the locking member is rotated so that the flat surface 377 does not intercept the passageway 367 as shown in Figure 16. Preferably the spherical bearing 355 and the locking member 373 are disposed opposite to each other in the housing 351 such that they align with the same groove on arm 345a. However, this is not deemed to be an essential feature. Instead, the locking member and the bearing may be displaced axially from one another by a distance equal to one or more grooves 363. Additional details of the locking mechanism similar to that used in this embodiment are shown in United States patent nos. 4,738,127 issued April 19, 1988 and 4,856,308 issued August 15, 1989, the teachings of which are incorporated herein by reference.

With the locking member in a locked position as shown in Figure 14, movement of the bar 347 along the axis of arm 345a is prevented by the arcuate surface 375 extending into the semi-circular groove in the arm. However, as shown in the Figure 16, with the locking member rotated 180° so that the arcuate surface 375 is removed from the groove, the relative movement of the arm 345a and the bar 347 may be effected in either direction, resisted only by the relatively moderate pressure exerted by bearing 355 spring biased through aperture 361 into contact with said grooves 363.

This embodiment is shown and described with lock engaging grooves on only one arm. It should be understood that both arms can be provided with grooves and that the bar can contain separate locks engaging the grooves on each arm, without departing form the scope of the invention. Furthermore, it is understood that the grooves need not totally circumscribe the arm. Instead, they can be positioned on the side of the arm which engaging the lock.

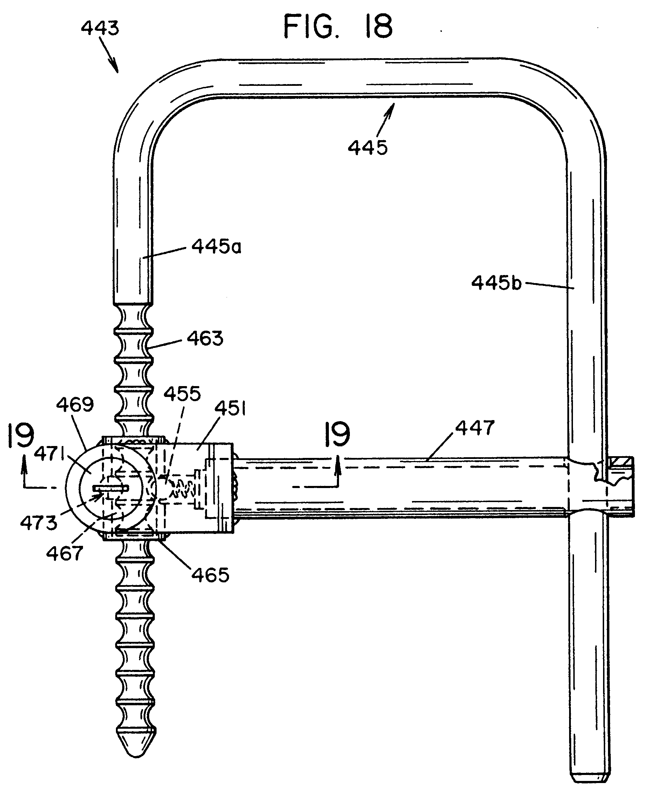

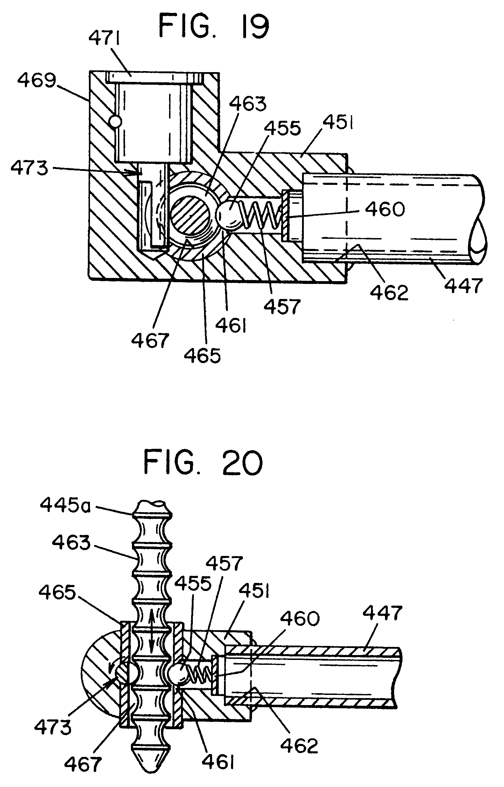

Figures 18-20 show the lock housing 451 and bar 447 assembled into an integral unit. The security device 443 comprises a U-shaped member 445 configured generally as shown in Figure 5. This member includes a first arm 445a having a series of semi-circular grooves 463 evenly spaced therealong. The bar 447 is shown as a tubular rod made from steel or steel alloy tubing adapted to simultaneously engage and move along arms 445a and 445b. The lock housing 451 contains a sleeve 465 secured therein, for example by press fit, welding, or brazing. The sleeve defines passageway 467 which engages arm 445a. The lock housing includes a boss 469 containing key lock 471. The details of the locking mechanism and its operation are similar to those previously described. The sleeve 465 contains aperture 461 sized to permit the bearing 455 to be biased by spring 457 part way into the passageway 467. This permits the bearing 455 to successively engage the semi-circular grooves spaced along the length of the rod arm 445a as the arm is inserted into and is withdrawn from sleeve 465. Spring 457 is held in place by retainer 460. The tubular bar 447 preferably is axially aligned with spring 457 and is anchored by suitable means in aperture 462 of housing 451. The bearing 455 and the arcuate portion of the locking member 473 are preferably axially aligned so that they both engage the same groove 463 in the arm. Alternatively, as before, the lock can be displaced from the bearing a distance equal to the distance between two adjacent grooves or a multiple thereof.

The device shown in Figures 18-20 can be further modified by placing a separate locking mechanism at each end of bar 447 and by providing longitudinally spaced apart grooves on arm 445b as well as arm 445a. Yet another variation involves the use of a single lock installed intermediate the two ends of the bar 447, adapted to simultaneously or sequentially to activate and deactivate locking members engaging the grooves in the respective arms. A suitable cam actuated or pivoted toggle device can be employed for this purpose.

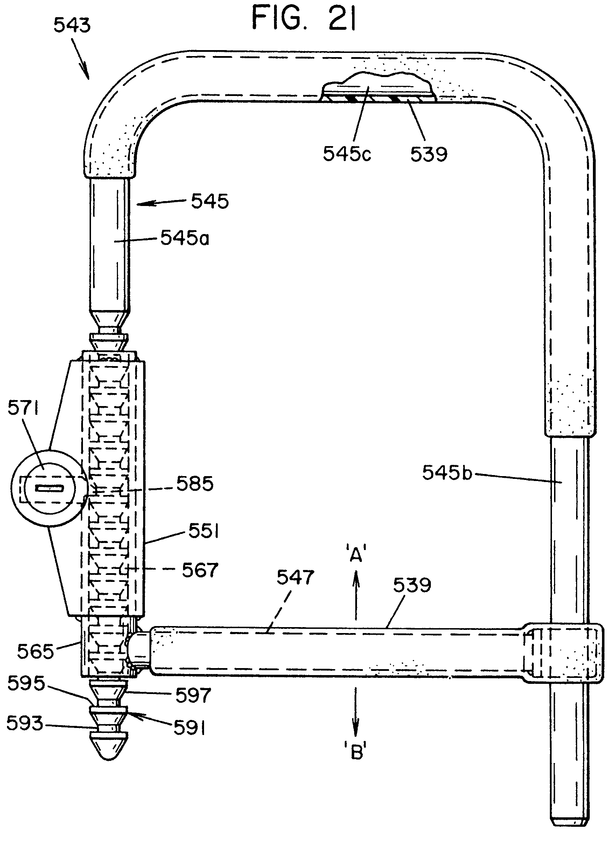

Figure 21 shows another device using a pawl and ratchet arrangement. As before, the device 543 comprises a generally U-shaped member 545 including first and second parallel arms 545a, 545b joined to each other by bight 545c. Rigid bar 547 joins arms 545a and 545b and is movable therealong into position whereupon the bar 547 is locked into place. Then it can only be removed by disengagement of the pawl from the ratchet teeth by actuation of the key lock 571. A plastisol coating 539 is shown covering portions of the U-shaped member 545 and bar 547. The details and operation of this embodiment are shown in U.S.patents nos. 4,935,047 issued June 19, 1990 and 5,277,042 issued January 11, 1994. Briefly, and with particular reference to Figure 21 herein, these patents describe the use of a plurality of longitudinally extending frusto-conical projections or ratchet teeth 591 spaced along the arm 545a. A key operated device actuates a pawl 585 which, when locked, engages the ratchet teeth to permit movement of the bar 547 in a first direction 'A' while preventing a movement of the bar 547 in the second direction 'B'. On the other hand, by operation of the key, the pawl can be withdrawn from the ratchet teeth thereby freely permitting movement of the bar 547 in either direction.

The pawl is contained in a blind hole in the housing 551 and is urged through aperture (not shown) in the sleeve 565 into the passageway 567 where the pawl contacts the ratchet teeth 591. Each tooth contains an inner surface 593 which extends between a stop surface 595 and a bearing surface 597. The operation of the pawl and ratchet is similar to, but reverse from the operation shown in said patents in that the direction of the teeth 591 of the individual ratchets is opposite to that shown in the patents. This permits the bar 547 to be moved toward bight 545c while the device is locked, but prevents movement of the bar 547 in the opposite direction away from the bight. As previously stated and shown with particular reference to Figures 8-11, it is not necessary for the ratchet teeth to circumscribe the arm. Instead, they may be disposed at spaced intervals along the outside of the arm where they engage the pawl 585.

Case hardened steel rod stock has been found to be a satisfactory material for the U-shaped member and the bar which itself can be somewhat curved rather than straight. For certain applications, the use of a flexible cable with connectors to engage the arms may be preferable to a rigid bar. Steel tubing is suitable for the sleeve while the lock housing may be made, for example, by zinc die casting techniques.

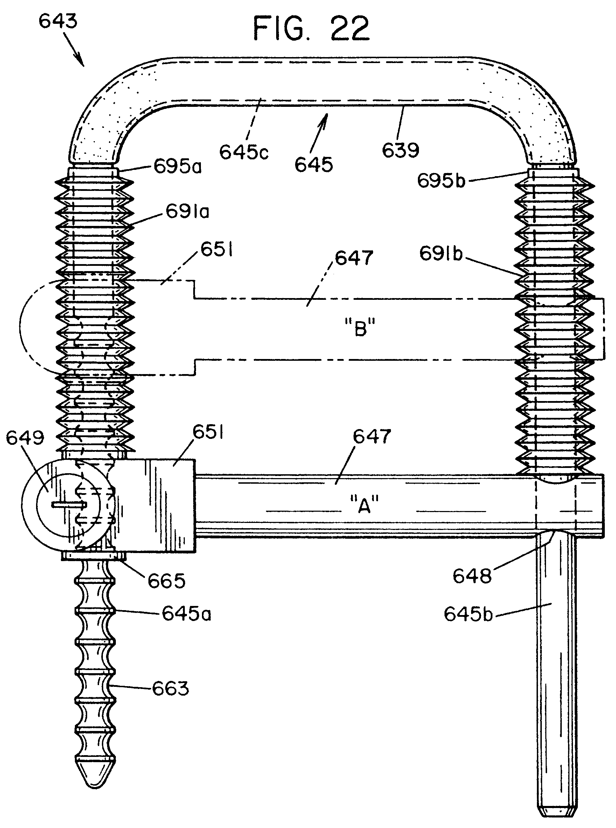

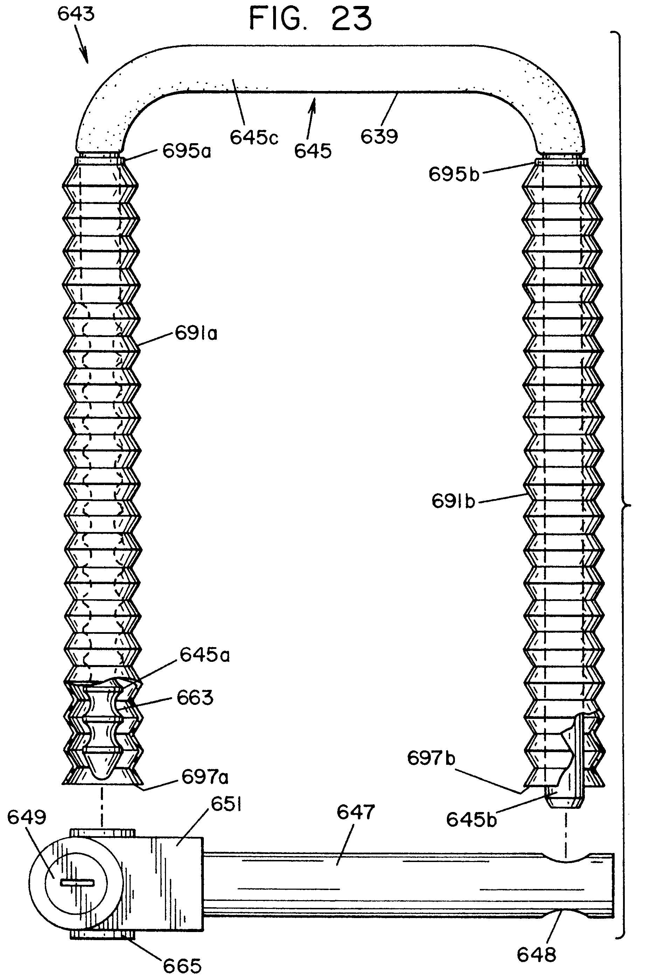

Figures 22 and 23 show a security device 643 comprising U-shaped member 645 and bar 647 additionally modified by using protective boots to cover the grooves 645a or ratchet teeth, and portions of the exposed arm 645b. A first protective boot 691a is associated with arm 645a and a second protective boot 691b is associated with arm 645b. As previously described, each boot preferably comprises an elastomer or polymer formed with accordion-type pleats to make a hollow compressible bellows. One end of boot 691a is secured to arm 645a by suitable means such as a clamp or ring 695a held in place by welding, set screw or the like. In like manner, boot 691b is attached to arm 645b by clamp 695b.

In Figure 22 the security device is shown with a bar 647 engaging the two arms 645a and 645b in a first position "A" and an outline in a second position "B", with the bellows collapsed or folded as shown. The metal surface of the device when locked thus is separated from the bicycle frame and/or the wheel by a rubber or plastisol layer 639. Marring or scratching of the bicycle surface is thereby minimized while at the same time the ratchet teeth or the semi-circular grooves 663 on arm 645 are protected from physical damage and corrosion. The use of a boot at least on the arm 345a also reduces the possibility of the user being pinched or cut by the ratchet teeth or grooves while using the device to secure the bicycle to an immovable object.

The bar 647 is joined to lock housing 651 containing lock 649. The housing 651 contains sleeve 665 engagable with arm 645a it also includes annular opening 648 adapted to engage and slide upon arm 645b.

When the bar 647 is removed from the U-shaped member 645, each of the bellows 691a and 691b resumes its relaxed shape with the free ends 697a and 697b extending the full length of arms 645a and 645b.

Although Figures 22 and 23 show the use of two bellows to cover both arms, the advantages of using a boot over only the arm or arms containing the ratchet teeth or semi-circular grooves are self evident. Thus the use of a single bellows covering one arm is clearly contemplated as being within the scope of the invention. The lock housing 651 contains a detent comprising a spring biased spherical bearing (not shown) which engages the semi-circular grooves 663 on arm 645a. As previously described, the lock 649 contains a semi-arcuate lock mechanism adapted in the locked position to engage the grooves to prevent the bar 647 from moving along the arm, The second arm 645b engages annular opening 648 in the bar whereupon the bar is movable (when unlocked) along both arms toward the bight 645c thereby folding or collapsing the bellows 691a, 691b. Movement of the bar 647 away from the bight 645c permits the bellows due to their natural resiliency to elongate to cover and protect the arms.

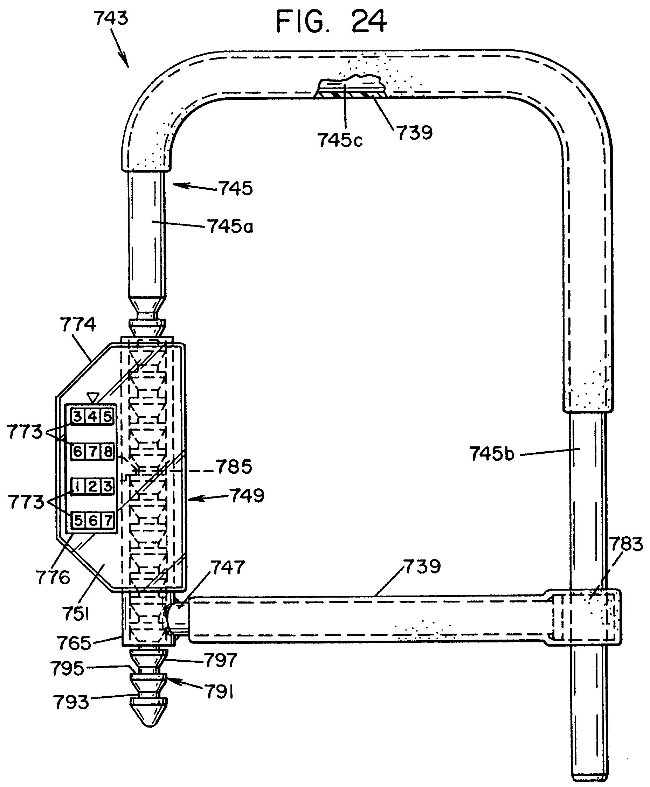

Another variation of the theft deterrent device utilizing a modified locking means is shown in Figure 24. Instead of a conventional cylindrical lock and key, a four tumbler combination lock is used to secure the position of the bar onto the arms of the U-shaped member.

This variation comprises a security device 743 comprising a U-shaped shackle member 745 and a bar 747 coupled to sleeve 765. Shackle member 745 comprises two parallel arms 745a and 745b joined by bight 745c. The sleeve 765 telescopically engages the arm 745a. This arm contains a plurality of ratchet teeth 791 uniformly spaced along at least a portion of its length. Each tooth comprises a stop surface 795, a sloped bearing surface 797 and an inner cylindrical surface 793. The ratchet teeth are adapted to engage pawl 785 to permit movement of the lock housing 751 and bar 747 toward the bight 745c, but to resist withdrawal of the bar from the ratchet tooth on the arms until the correct combination of numbers is dialed in to the lock 749 thereby releasing the lock mechanism. As before, the exposed portions of the device preferably are covered with a plastisol coating 739. The opposite end of the bar 747 terminate in a U-shaped member 783 adapted to engage arm 445b. Additional features previously described can be included with the device shown in Figure 24 such as an accordion boot adapted to cover the ratchet teeth on the first arm 745a and/or a second boot covering the second arm 745b. In addition, semi-circular grooves of the type previously described can be used instead of the ratchet teeth. As yet another embodiment, both of the arms are equipped with teeth or grooves and the bar includes two separate combination locks adapted to engage both arms. In addition, the ratchet teeth or the grooves need not totally circumscribe the arm but will satisfactorily engage the locking mechanism if they are along the outward surface of each arm, facing away from one another.

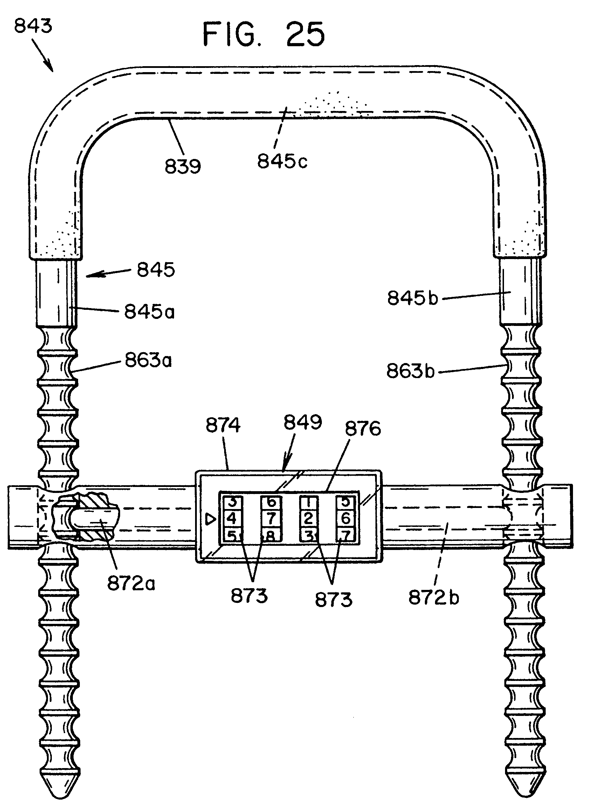

Another variation showing the use of one combination lock to engage both arms is shown in Figure 25. In this embodiment, the security device 843 comprises a U-shaped shackle member 845 consisting of parallel arms 845a, 845b joined by bight 845c. The bight and adjacent portions of each arm are covered with a protective plastisol coating 839. Each arm contains a plurality of semi-circular grooves 863a, 863b evenly spaced along the length thereof. Although completely circumscribing each arm, the grooves instead can be formed solely along the inner side of each arm. The grooves are positioned to be engaged by a locking/unlocking device such as a cam actuated or lever actuated toggle mechanism the operation and design of which are well known to those skilled in the art. Such a mechanism comprise a pair of rods 872a (shown in a partial cut-away) and 872b (shown in phantom) movable axially with respect to the bar into and out of engagement with the grooves 863a, 863b.

As an added element of protection for the lock mechanism, whether a combination lock or a key lock, a bubble package or envelope is used. This is particularly advantageous on locks that are carried on mountain bikes and other types of all terrain vehicles where exposure to dirt, mud and other debris is commonplace and spills are routine. The frequent bumping and jarring which is encountered under these conditions is absorbed by the shock absorbing air bubbles. The production of the material for the bubble packaging is well known and does not comprise a part of the present invention. The shock insulation is secured on place around the lock by heat sealing, by adhesive binding or by other similar means such as tape. The transparency of the bubble pack material facilitates the visualization of the numbers or symbols on the lock.

Figure 24 shows the lock housing 751 covered with a layer 774 of bubble wrap with an opening 776 to permit ready access to the tumblers 773.

In like manner, the combination lock 849 shown in Figure 25 is protected by a bubble wrap layer 874 with opening 876 to permit access to tumblers 873.

Typically bubble wrap materials are made from suitable laminated sheet plastic such as polyethylene or other polyolefin. Other similar flexible coverings may be used in place of the bubble wrap, and may include a flap, held in place with a material such as Velcro, and adapted to cover and protect the tumblers against exposure.

As previously mentioned, the bellows are molded or otherwise formed from a suitable elastomer or rubber. The other components of the present device - the two U-shaped members and the parts of the locking mechanism are made from materials that are reasonably capable of withstanding efforts to pick or break the lock, to cut through the rod or the sleeve or to force the two U-shaped members apart. As previously mentioned steel tubing and a case hardened steel rod have been found to be satisfactory materials of construction for "The Club" and also work well in the production of the device of the present invention. However, there is a tendency to use light weight materials in the production of bicycles and their components as well as accessories carried on the bike or on the person of the bike rider. For this reason, the use of light weight materials such as steel alloys, titanium, and its alloys, aluminum alloys, and non metallic composites should be considered for the construction of all or some of the components of this device. The practicality of their use is governed by the ability to form them into the desired shape and by the ability of the device to prevent the thefts intended to be discouraged by its use.

Preferably, a suitable coating of a plastisol is applied to all of the exposed metal surfaces of the device that are not covered by the boot and that may contact the bike. This coating, cooperative with the boot will prevent the device from scratching or otherwise marring the finish on the bike. If the device is carried on the bike when the device is not in use, the polymer coating also prevents annoying metal to metal noise as the bike is moving. the coating also serves to protect the component parts from corrosion and physical abuse.

It can readily be determined that the invention includes other variations and modifications without departing from the scope thereof. For example instead of making the arm containing the ratchet teeth longer than the other arm of the rod, the same effect can be achieved by making the first sleeve arm of the sleeve longer than the second sleeve arm. Furthermore, the bellows shaped boot can be temporarily or detachably connected to the ratchet arm rather than being permanently affixed thereto.

It will be appreciated that other modifications or alterations can be made in the present invention without departing from the scope thereof as covered by the appended claims and their equivalents.

## Claims

1. A theft deterrent device comprising
a) first and second opposed generally U-shaped members, each member having first and second parallel arms, the parallel arms of one member being telescopically engaged with the parallel arms of the other member, and b) lock means associated with said U-shaped members for securing said members, when engaged, from being pulled apart, while allowing said members to be telescoped together.

2. The device according to claim 1, wherein the first of said U-shaped members contains a plurality of spaced ratchet teeth along the first parallel arm, said ratchet teeth at least partially circumscribe said first arm of said first U-shaped member, and said lock means includes a pawl engaging said ratchet teeth to permit the two U-shaped members to be telescoped together but not apart when said lock means is locked, and to permit movement in either direction when said lock means is unlocked.

3. The device according to claim 1 or 2, wherein said first arm of said first U-shaped member is a rod containing said ratchet teeth spaced longitudinally therealong, and wherein said first parallel arm of said second U-shaped member comprises a first tubular sleeve to telescopically receive said rod, said device further including protective means for progressively covering the ratchet teeth on the first arm as said arm is withdrawn from said first tubular sleeve.

4. The device according to anyone of the claims 1 to 3, preferably to claim 3, wherein the second parallel arm of said first U-shaped member comprises a sleeve, said rod and sleeve of said first U-shaped member engaging respectively, a tubular sleeve and a rod comprising the two arms of said second U-shaped member.

5. The device according to anyone of the claims 1 to 4, preferably to claim 2, wherein said lock means is contained in a lock housing joined with said first tubular sleeve and includes means adapted to engage said ratchet teeth.

6. The device according to claim 5, wherein the teeth engaging means comprises a pawl, and the lock housing includes means engaging said pawl to alternately move said pawl into contact and out of contact with said ratchet teeth.

7. The device according to anyone of the claims 2 to 6, preferably to claim 6, wherein each ratchet tooth includes a flat stop surface generally perpendicular to the axis of said rod providing an abutment surface against said pawl when said device is locked to prevent movement of said rod out of said sleeve, and a second surface sloping inwardly toward the rod axis from the radially outer edge of the stop surface whereby movement of the rod into said sleeve is not prevented.

8. The device according to anyone of claims 1 to 7, preferably to claim 3, wherein the exposed portions of the device are covered with a layer of an elastomeric or polymeric material.

9. The device according to claim 3 and anyone of claims 1, 2 and 4 to 8, wherein the progressive covering means includes flexible bellows adapted to elongate and surround the ratchet teeth as the first arm of said first U-shaped member is telescoped out of the first tubular sleeve of said second U-shaped member.

10. The device according to claim 9, wherein one end of said bellows is attached to said rod and the other end contracts and elongates as said one arm is moved into and out of said tubular sleeve.

11. The device according to anyone of claims 2 to 10, preferably to claim 10, wherein the two arms of said first U-shaped member are unequal in length with the first arm containing the ratchet teeth extending between about ½" to about 1½" beyond the second arm.

12. The device according to anyone of claims 3 to 11, preferably to claim 11, wherein the second tubular sleeve terminates in an open end, and said open end is notched to facilitate engagement of said second arm of said first U-shaped member into said sleeve, when telescoping the members together.

13. A device useful as a theft deterrent for a bicycle, said device including a first generally U-shaped component comprising a metal rod having two parallel arms, the first of said arms containing a plurality of longitudinally spaced ratchet teeth to be received within a first cylindrical sleeve forming at least one arm of a second U-shaped member, said first sleeve including a lock housing associated therewith, a pawl within said lock housing and means for biasing said pawl into and out of contact with said ratchet teeth, each of said teeth forming a flat stop surface perpendicular to the axis of said first arm to abut said pawl and a second surface extending from the peripheral edge of each tooth at an angle which does not present an abutment surface for said pawl, said ratchet teeth oriented such that said abutment surfaces are adapted to engage said pawl when locked to prevent said first arm from being telescopically withdrawn from said first sleeve, said lock housing including a lock for activating a biasing means for moving said pawl into contact with said ratchet teeth whereby said two members may not be telescopically disengaged, and for deactivating said biasing means to permit the two members to telescope in either direction with respect to one another, and bellow means adapted to telescope over the ratchet teeth which become exposed as said first arm is withdrawn from said sleeve.

14. In a security device utilizing a rod slidably received within a cylindrical sleeve said rod containing a plurality of longitudinally spaced ratchet teeth, said ratchet teeth at least partially circumscribes said rod and a locking means for engaging and disengaging the ratchet teeth on said rod to alternatively prevent or permit movement of the rod in one direction with respect to said sleeve; the improvement comprising a flexible protective boot adapted to telescopically cover said ratchet teeth on said rod as said rod is withdrawn from the sleeve.

15. The security device of claim 14, wherein said flexible boot comprises an elastomeric or polymeric annular bellows.

16. The security device of claim 15, wherein said bellows includes a first end secured to said rod in proximity to, but spaced from, said teeth and a second end adapted to extend around said teeth as they are withdrawn from said cylindrical sleeve.

17. The security device of claim 15 or 16, wherein said bellows include a first end secured to said sleeve and a second end extendible over said teeth as they are withdrawn from said sleeve.

18. The security device according to anyone of claims 14 to 17, preferably to claim 15, wherein said rod comprises the first arm of two parallel arms of a U-shaped member, and said sleeve comprises the first of two parallel sleeves of a second, tubular U-shaped member, whereupon the two arms of said first member telescopically engage the two sleeves of said second member.

19. A theft deterrent device comprising a) a generally U-shaped member having first and second parallel arms and a bight, at least the first of said arms containing a plurality of lock engaging means spaced along a portion of its length, b) a bar having first and second ends for engaging respectively the first and second parallel arms, said bar being moveable toward and away from said bight along the axis of said arms while so engaged, and c) lock means engaged by said lock engaging means, said lock means when unlocked serving to fix the location of the bar along said arms and when locked serving to prevent removal of the bar from said arms.

20. The device according to claim 19, wherein said lock engaging means comprises a plurality of semicircular grooves evenly spaced longitudinally along and at least partially circumscribing said first of said arms.

21. The device according to claim 20, wherein the lock means comprises at least one lock which includes positioning means for locating said lock along one of said arms relative to said grooves, and a locking mechanism operable between an unlocked position whereby movement of the bar in an axial direction along said arms is permitted and a locked position whereby said movement between the bar and the arm is prevented.

22. The device according to claim 21, wherein each of said locks, including the positioning means and a locking mechanism, is contained in a lock housing, said lock housing being joined to said bar and having a passageway to axially receive one of said arms.

23. The device according to claim 22, wherein said positioning means includes a blind hole at right angles to said passageway and having an opening communicating with said passageway, a spherical bearing contained in said blind hole and having a diameter slightly greater than said opening, said bearing biased into said opening to partially intersect said passageway and to contact said semi-circular grooves in at least said first arm.

24. The device according to anyone of claims 20 to 23, preferably to claim 23, wherein each said lock includes a generally cylindrical key activated locking mechanism mounted within its lock housing at a location whereby operation of the locking mechanism does not impede the movement of the spherical bearing into and out of the semi-circular grooves, said locking mechanism having a flat portion on one side thereof and an arcuate portion opposite thereto and conforming to the curvature of said semicircular grooves, said locking mechanism being rotatable between a locked position wherein said arcuate portion contacts one of said grooves to arrest axial movement of the bar with respect to at least said first arm, and an unlocked position whereby said movement is interrupted solely by the spherical bearing biased into and out of each successive semi-circular groove.

25. The device according to claim 23 or 24, wherein a coil spring is positioned in said blind hole to bias said spherical bearing through said opening into contact with said semi-circular grooves.

26. The device according to anyone of claims 23 to 25, preferably to claim 25, wherein said blind hole extends into the end of the bar that is coupled to said lock housing.

27. The device according to anyone of claims 22 to 26, preferably to claim 25, wherein each lock housing is joined to the bar at right angles thereto.

28. The device according to claim 29, wherein said lock means comprises at let one key activated lock or one combination lock.

29. The device according to anyone of claims 19 to 28, preferably to claim 28, wherein said lock engaging means are longitudinally spaced along one of said two arms and said lock means comprises one lock.

30. The device according to anyone of claims 19 to 29, preferably to claim 28, wherein said lock engaging means are longitudinally spaced along both of said parallel arms.

31. The device according to anyone of claims 19 to 30, preferably to claim 30, wherein said lock means comprises one lock which is simultaneously engaged by both rows of lock engaging means.

32. The device according to anyone of claims 19 to 31, preferably to claim 30, wherein said lock means comprises two separate locks, each lock cooperating with the lock engaging means on one of said arms to position the bar with respect to said arm.

33. The device according to anyone of claims 19 to 32, preferably to claim 28, wherein each lock is enclosed in a protective cover.

34. The device according to claim 33, wherein the protective cover comprises a bubble wrap material.

35. The device according to claim 19, wherein said lock engaging means comprises a plurality of ratchet teeth uniformly spaced longitudinally from one another along the first arm.

36. The device according to claim 35 wherein said lock means includes a pawl adapted to engage said ratchet teeth along said first arm when said lock is locked whereby said bar is prevented from being disengaged from said parallel arms, said lock engaging means at least partially circumscribe the arm.

37. The device according to claim 35 or 36, wherein the ratchet teeth fully circumscribe at least said first arm, each of said ratchet teeth including a flat stop surface generally perpendicular to the axis of the first arm and a frusto-conical surface extending inwardly toward said axis from the radially outer edge of the stop surface whereby engagement of the pawl with the stop surface does not impede movement of the bar toward the bight.

38. The device according to anyone of claims 35 to 37, preferably to claim 36, wherein the lock engaging means extend along at least a portion of both arms and are positioned on the side of each arm facing away from one another.

39. The device according to anyone of claims 19 to 38, preferably to claim 19, wherein portions thereof are covered with a protective covering comprising at least one flexible elastomeric boot telescopically covering portions of an arm along which the bar moves from a disassembled position to an assembled position, and an adhered plastisol coating covering other portions of the bar and the U-shaped member.

40. In a bicycle theft deterrent device comprising a generally U-shaped member having first and second parallel arms, a bar movably engaging said arms and means for locking said bar at a fixed location along said arms, said device further including a protective polymeric plastisol coating adhered to exposed portions of the U-shaped member and bar and a flexible protective boot telescopically covering the portion of at least one arm of the U-shaped member that is engaged with and disengaged from said bar.

41. The device according to claim 40, wherein each flexible boot comprises an annular elastomeric or polymeric bellows.

42. The device according to claim 41, wherein said bellows includes a first end secured to said at least one arm in proximity to said plastisol coating and a second unsecured end telescopically collapsible or extendable around the arm as the bar is progressively engaged with or disengaged from said arm.

43. The device according to anyone of claims 40 to 42, preferably to claim 42, wherein at least one parallel arm contains lock engaging means comprising semicircular grooves or ratchet teeth evenly spaced along and at least partially circumscribing said arm, said bellows being adapted to telescopically cover said grooves or teeth.

44. The device according to anyone of claims 40 to 43, preferably to claim 40, including a protective covering around said bar locking means.

45. The device according to claim 44, wherein each covering is composed of a bubble wrap material.

46. A security device comprising a) a generally U-shaped rod member including first and second parallel arms joined by a bight, b) a second member engaging both arms and being movable along said arms toward and away from the bight, and c) lock means to prevent disengagement of the second member from said arms when the device is locked, and which permit disengagement of said second member from said rod member when the device is unlocked, said second member being freely separable from the first member when the device is unlocked.

47. The device according to claim 46 wherein said lock means includes a plurality of ratchet teeth spaced along at least one of the two parallel arms and a pawl spring biased into abutting contact with one of said ratchet teeth when the device is locked, said ratchet teeth at least partially circumscribe said arm.

48. The device according to claim 46 or 47, wherein said lock means includes a plurality of semi circular grooves spaced along at least one of the two parallel arms and a lock mechanism having a semi-arcuate portion rotatable into contact with one of said semi-circular grooves in a locked position and rotatable out of contact with said grooves in an unlocked position.

49. The device according to claim 48 further including a spherical bearing spring biased into engagement with said semi-circular grooves to position the second member along the arms of said first member prior to actuation of said lock member.

50. The device according to claim 48 or 49 wherein the semi-circular grooves fully circumscribe the arm.
